# DEMANDE DE BREVET EUROPEEN

(11) **EP 0 967 564 A1**
(43) Date de publication de la demande: **29.12.1999**
(21) Numéro de dépôt: 99401344.9
(22) Date de dépôt: 04.06.1999
(51) Int. Cl.: G06K 7/00

(54) **Lecteur de carte a circuits et connecteur pour un tel lecteur**

(30) Priorité: 22.06.1998 FR 9807834
(71) Demandeur: ALCATEL, 75008 Paris (FR)
(72) Inventeur: Grimaldi, Jean-François, 75015 Paris (FR); Torchet, Pascal, 92110 Clichy (FR)
(74) Mandataire: Lamoureux, Bernard

(57) **Abrégé**

L'invention concerne un lecteur de carte à circuit(s) électrique(s) comportant un connecteur destiné à assurer une liaison électrique entre des contacts (12₁, 15₁) de la carte (17) et des contacts correspondants (12, 15) de circuits du lecteur, ces contacts se trouvant sur une plaquette (10), notamment de circuit imprimé, parallèle à la carte (17) quand celle-ci est installée dans le lecteur.

Pour limiter l'encombrement, les contacts sur la plaquette (10) sont sensiblement au droit des contacts correspondants sur la carte (17) quand celle-ci est installée dans le lecteur, ou se trouvent à l'intérieur de la zone de projection des contacts de la carte sur la plaquette. Pour établir la connexion entre deux contacts correspondants (12, 12₁) de la carte et du lecteur, le connecteur (18) comporte deux lames élastiques (76, 80, 82, 88) mécaniquement indépendantes mais en liaison électrique et dont les extrémités libres comportent les zones d'application avec les contacts, respectivement, de la plaquette (10) du lecteur et de la carte (17).

Application à un téléphone portable.

## Description

La présente invention concerne un lecteur de carte à circuit(s) électrique(s) ou carte à mémoire. Elle concerne aussi un connecteur, notamment pour un tel lecteur.

Les lecteurs de cartes à circuit(s) électrique(s) ou de carte à mémoire sont utilisés couramment pour des applications diverses telles que les paiements ou les identifications. Ces lecteurs sont souvent portatifs, en particulier pour être intégrés à un autre équipement. Par exemple, certains téléphones dits portables sont équipés de tels lecteurs afin qu'ils ne puissent être utilisés que par le titulaire autorisé. L'identification de l'abonné est fournie par la carte à mémoire. Elle doit correspondre à l'identification se trouvant dans une mémoire du lecteur.

Il est préférable que les lecteurs, notamment les lecteurs portables, présentent une taille aussi réduite que possible.

L'invention a pour but de réduire la taille d'un lecteur de carte à circuit(s), notamment portable, sans compromettre ses qualités.

Elle part de la constatation que la taille du connecteur, qui relie les contacts de la carte à circuits aux contacts correspondants du lecteur, contribue, pour une part importante, à l'encombrement du lecteur.

On connaît en effet deux types de connecteurs pour lecteurs de cartes.

Dans le premier type, le connecteur comprend des lames élastiques dont chacune comporte une première extrémité soudée à un contact correspondant d'une plaquette de circuit imprimé du lecteur et une seconde extrémité libre destinée à entrer en contact avec les contacts, ou plots, de la carte amovible disposée parallèlement à la plaquette. Chaque lame élastique forme un angle aigu de valeur relativement faible avec le plan de la plaquette. Les lames présentent donc un encombrement non négligeable en projection sur le plan de la plaquette de circuit imprimé.

Dans le second type, le connecteur comprend des lames élastiques en saillie d'un cadre. Chaque lame présente, en section, une forme similaire à une alternance de sinusoïde aplatie dont le fond constitue un contact pour un plot de la plaquette du circuit imprimé du lecteur et dont le sommet entre en contact avec un plot de la carte. Dans ce cas aussi, les lames présentent un encombrement non négligeable en projection sur le plan de la plaquette du circuit imprimé.

Ainsi, dans les lecteurs connus, les contacts, ou plots, de la plaquette de circuit imprimé forment deux rangées éloignées l'une de l'autre d'une distance supérieure au double de la longueur de la projection d'une lame élastique sur la plaquette de circuit imprimé. L'intervalle entre ces rangées est inoccupé.

L'invention permet de minimiser la zone d'occupation des contacts sur le circuit imprimé.

Elle est caractérisée en ce que les contacts ou plots de la plaquette de circuit imprimé sont sensiblement au droit des contacts ou plots de la carte quand celle-ci est installée dans le lecteur, parallèlement à la plaquette. Les contacts sur la plaquette peuvent aussi se trouver à l'intérieur de la zone de projection des contacts de la carte sur la plaquette.

Dans un mode de réalisation de l'invention, le connecteur comporte, pour chaque couple de plots à connecter entre la carte et le lecteur, deux lames élastiques mécaniquement indépendantes mais reliées électriquement, chacune présentant une extrémité libre destinée à entrer en contact avec le plot correspondant de la carte ou du circuit imprimé. Les deux lames étant mécaniquement indépendantes l'une de l'autre, on bénéficie d'un degré de liberté pour réduire l'encombrement et choisir les pressions de contact des lames sur les plots correspondants.

Les deux lames sont, dans un exemple, reliées à une agrafe qui est fixée sur un support isolant. Cette agrafe peut être disposée à proximité du plan de la carte de façon à minimiser l'encombrement au niveau de la plaquette du circuit imprimé du lecteur. L'agrafe a, par exemple, une forme de U dont les branches sont avantageusement parallèles au plan de la plaquette du circuit imprimé du lecteur. Cette agrafe est, de préférence, d'un seul tenant avec les lames.

L'ensemble des lames élastiques du connecteur est, dans une réalisation, solidaire d'un support s'appuyant sur un capot de protection des circuits. Dans ce cas on aura avantage à prévoir, dans la partie centrale du support, un moyen de positionnement de ce dernier (et donc du connecteur) par rapport à la plaquette de circuit imprimé. Ce moyen de positionnement est, de préférence, aussi un moyen de fixation, par exemple une vis. Étant donné que le support du connecteur s'appuie sur le capot de protection, le moyen de fixation du support à la plaquette de circuit imprimé constitue aussi un moyen d'assemblage du capot de protection à la plaquette.

Quand le connecteur comprend des paires de lames élastiques mécaniquement indépendantes reliées par une agrafe fixée à un support isolant, la zone d'appui de ce support isolant au capot de protection est avantageusement sous les agrafes.

Il est préférable que le support soit plus éloigné de la plaquette que de la carte afin de pouvoir loger des composants de circuit, sur la plaquette, sous le support. Dans ce cas on a avantage à maximiser la distance entre le support et la plaquette afin de maximiser la longueur de la lame élastique s'appuyant contre la plaquette. En effet, si cette lame est presque perpendiculaire à la plaquette, plus la longueur de la lame est importante, plus son domaine élastique sera grand, c'est-à-dire que la lame risquera moins de se déformer de façon permanente, une telle déformation pouvant empêcher le contact.

D'autres caractéristiques et avantages de l'invention apparaîtront avec la description de certains de ses modes de réalisation, cette description étant faite en se référant aux dessins ci-annexés sur lesquels :
la figure 1 est une vue en coupe d'une partie d'un lecteur de carte conforme à l'invention,
la figure 1a est une vue de contacts ou plots du lecteur de la figure 1,
la figure 2 est une vue en perspective de dessus d'un connecteur du lecteur de la figure 1,
la figure 3 est une vue en perspective de dessous du connecteur de la figure 2, et
la figure 4 est une vue d'une partie du lecteur représenté sur la figure 1.

L'exemple de réalisation de l'invention que l'on va décrire en relation avec les figures se rapporte à un lecteur de cartes pour téléphone portable. La carte à circuit, généralement dénommée carte à circuit intégré, carte "à puce", ou carte à mémoire, constitue un moyen d'identification de l'abonné.

Étant donné qu'un téléphone portable et qu'un lecteur de carte pour un tel téléphone sont bien connus, on ne décrira ci-après que les parties du lecteur de carte et du téléphone auxquelles s'applique l'invention.

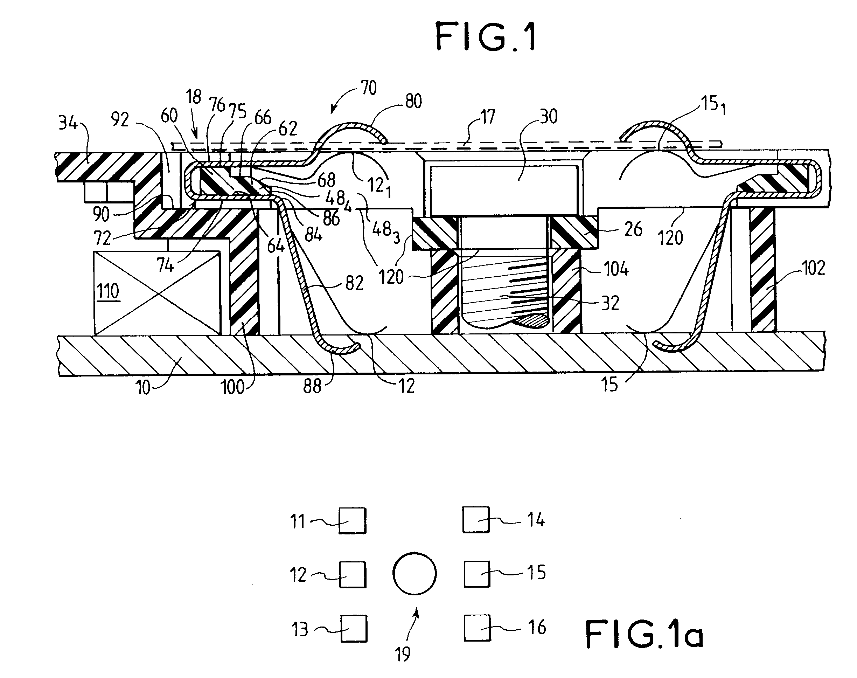

Les divers composants des circuits du téléphone portable et du lecteur de carte sont disposés sur une plaquette de circuit imprimé 10 qui présente six contacts 11, 12, 13, 14, 15 et 16 (figure 1a) pour la connexion à six contacts correspondants 12₁, 15₁, etc. de la carte à circuit intégré 17. Sur la figure 1, qui est une vue en coupe, on a représenté seulement deux contacts 12 et 15 de la plaquette 10 et les contacts correspondants 12₁ et 15₁ de la carte 17 ; cette dernière est représentée seulement en partie et en traits interrompus.

Pour minimiser l'aire de la zone 19 (figure 1a) occupée par les contacts ou plots 11, 12, 13, 14, etc. de la plaquette 10 destinés a être connectés aux contacts correspondants de la carte parallèle 17, on installe ces contacts de la plaquette pratiquement au droit des plots correspondants de la carte 17 quand celle-ci est disposée dans le lecteur. Autrement dit, la ligne virtuelle reliant les contacts 12 et 12₁ et, de même, la ligne virtuelle reliant les contacts 15 et 15₁, se trouvent pratiquement sur une perpendiculaire au plan de la plaquette 10. Cependant, il n'est pas indispensable que les contacts 12, 12₁ et 15, 15₁ se trouvent exactement sur une telle perpendiculaire. Ainsi, dans l'exemple représenté, les centres des contacts 12 et 15 se trouvent à l'intérieur du segment délimité par la projection droite des centres des contacts 12₁ et 15₁ sur le plan de la plaquette.

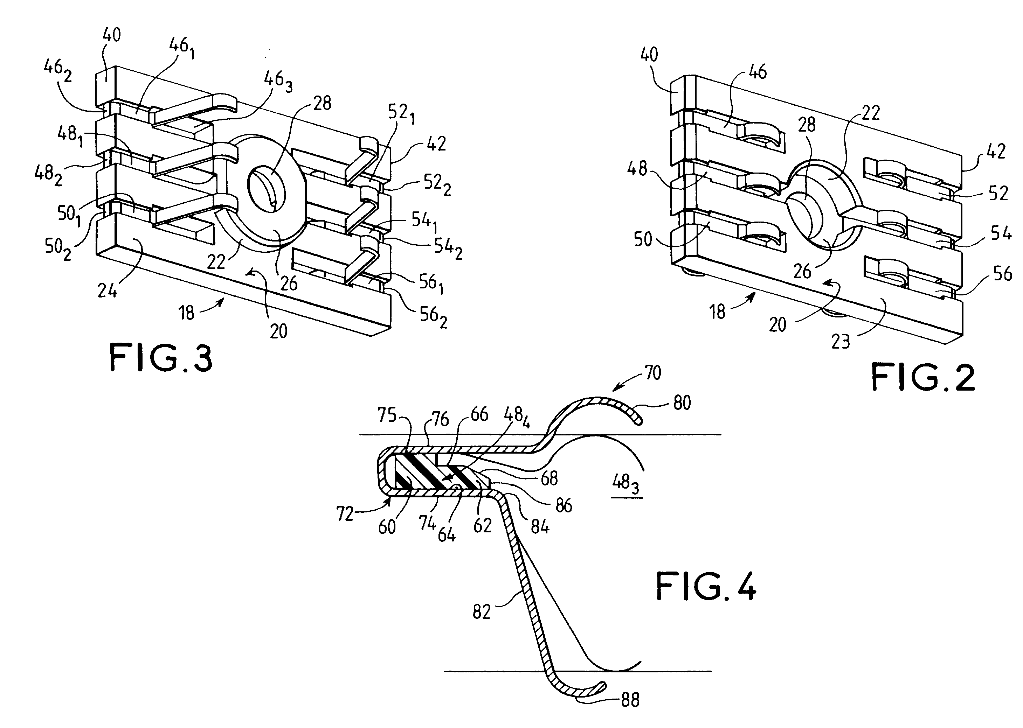

La liaison électrique entre les contacts 12 et 12₁, 15 et 15₁ etc. est assurée à l'aide d'un connecteur 18 qui est représenté en détail sur les figures 2 et 3.

Ce connecteur comporte un support isolant 20 ayant la forme générale d'une plaque rectangulaire présentant, dans sa partie centrale, un puits circulaire 22 se prolongeant sous la face inférieure 24 et se terminant par un fond 26 à ouverture circulaire 28. Ce puits loge une tête 30 de vis 32 (figure 1) qui traverse l'ouverture 28. Cette vis 30, 32 assure la fixation, à la plaquette 10, du connecteur et d'un capot de protection 34.

La face supérieure 23 et la face inférieure 24 du support 20 présentent, chacune, six rainures parallèles aux grands cotés, et débouchant sur chacun des petits côtés 40 et 42.

Sur la face supérieure, les rainures débouchant sur le petit côté 40 ont pour références 46, 48 et 50. Sur la même face supérieure les rainures débouchant sur le second petit côté 42 ont pour références 52, 54 et 56.

Les rainures de la face inférieure 24 ont pour références 46₁, 48₁, 50₁ ainsi que 52₁, 54₁, et 56₁. Elles sont exactement au droit des rainures de mêmes références et sans indice de la face supérieure. La rainure 461 communique avec la rainure 46 par un évidement 46₂ du petit côté 40. De même, les rainures 48 et 48₁, 50 et 50₁, 54 et 54₁, ainsi que 56 et 561 communiquent par l'intermédiaire d'évidements, respectivement 48₂, 50₂, 52₂, 54₂ et 56₂.

Dans l'exemple, chaque rainure se termine, à l'opposé du petit côté 40 ou 42, par une ouverture sensiblement rectangulaire du support 20. Par exemple, les rainures 46 et 461 se terminent par une ouverture 46₃ (figure 3).

La partie, ou pont, du support isolant 20 qui se trouve entre deux rainures correspondantes, par exemple la partie 48₄ (figure 4) entre les rainures 48 et 48₁, présente, vers le bord libre correspondant 40, une section 60 de plus grande épaisseur et, vers l'ouverture 48₃, une section 62 de plus faible épaisseur. Le fond 64 de la partie 48₄ est le même pour les sections 60 et 62. Par contre les plafonds de ces sections 60 et 62 ne sont pas aux mêmes niveaux, le niveau du plafond 66 de la section 62 étant au dessous du niveau du plafond de la section 60. En outre le plafond 66 se termine par un biseau 68 vers l'ouverture 48₃.

Les rainures associées 48 et 48₁ et les évidements correspondants 48₂ ainsi que le pont 48₄ servent de logement et de support à un élément 70 du connecteur 18. Cet élément comprend, tout d'abord, une agrafe métallique en U 72 dont les deux branches, respectivement 74 et 76, s'appliquent contre, respectivement, le fond 64 et le plafond du pont 48₄. La branche supérieure 76 de l'agrafe métallique 72 s'applique ainsi sur une longueur 75 du plafond (celui de la section 60) plus courte que la longueur sur laquelle s'appuie la branche inférieure 74 contre le fond 64. La branche supérieure 76 se prolonge par une branche recourbée 80, en saillie vers le haut, dont la face extérieure est destinée à entrer en contact avec un plot 12₁ de la carte 17.

La branche inférieure 74 de l'agrafe 72 est prolongée, vers le bas, par une branche flexible 82 dont la liaison 84 avec la branche 74 est peu éloignée du bord 86 de l'ouverture 48₃ ; cette branche 82 forme un angle obtus, presque droit, avec cette branche horizontale 74. La branche 82 se termine, vers le bas, par une autre partie recourbée 88 destinée à entrer en contact avec le plot 12 de la plaquette 10 de circuit imprimé.

Ainsi, la branche 82, ou lame, destinée à entrer en contact avec la plaquette 10, présente une extrémité fixe 84 dont la distance à la plaquette 10 est sensiblement plus grande que la distance à la carte 17.

Les positions des branches 82 et 80 qui sont représentées en trait épais sur les figures 1 et 4 correspondent au connecteur avant son installation dans le lecteur, tandis que les positions représentées en trait fin correspondent au connecteur installé dans le lecteur, la carte 17 étant aussi introduite dans le lecteur.

La distance entre les plots 12 et 15 étant légèrement inférieure à la distance entre les contacts 12₁ et 15₁ de la carte 17, la surface occupée par les contacts 12 et 15 (ainsi que par les autres contacts 11, 13, 14, 16) est minimisée.

Le support rectangulaire 20 est appliqué par sa face inférieure contre le fond 90 d'un puits 92 ménagé dans le capot 34 destiné à protéger les circuits et contacts se trouvant sur la plaquette 10. Ce capot, en matière isolante, constitue un appui pour le boîtier (non représenté en entier) du lecteur de carte 17. Il s'appuie par des parois verticales 100, 102 contre la plaquette 10.

Par ailleurs, le fond 26 du puits 22 du support 20 du connecteur 18 s'appuie contre le sommet d'un cylindre 104 solidaire du capot 34 qui s'appuie lui-même sur la face supérieure de la plaquette 10. Le cylindre 104 est relié au capot 34 par des nervures 120.

Ainsi, quand la vis 30, 32 est installée, c'est-à-dire quand elle traverse la plaquette 10 et coopère avec un écrou (non montré) sous la plaquette, ou quand elle coopère avec un taraudage du cylindre 104, ce support 20 appuie contre le fond 90 du puits 92 et assure une fixation du capot 34 à la plaquette 10. Autrement dit, la vis 30, 32 permet de positionner le connecteur par rapport à la plaquette, de fixer ce connecteur et d'assurer aussi la fixation du capot 34.

La minimisation de la surface occupée par les contacts 11, 12, 13, 14, 15 et 16 sur la plaquette 10 peut être mise à profit pour installer des composants dans l'emplacement ainsi dégagé. On voit par exemple sur la figure 1 un composant 110 (ou un ensemble de composants) qui se trouve sous le fond 90 du puits 92. Dans l'exemple, ce composant 110 fait partie du circuit du téléphone portable.

On comprend que les deux pattes ou lames élastiques 82 et 76, du fait de leur élasticité, assurent des forces de contact suffisantes contre les plots 12, 15, d'une part, et 12₁, 15₁, d'autre part. La configuration presque verticale et la grande longueur de la lame 82 permettent une force de pression importante et un domaine élastique suffisant. L'indépendance mécanique entre les deux lames élastiques contribue à l'optimisation des forces de contact.

Dans une variante, la jonction 84 de la branche 82 à la branche 74 de l'agrafe 72 est à distance du rebord 86, à l'intérieur du trou 48₃.

Le connecteur 18 décrit en relation avec les figures 1 à 4 peut être utilisé pour d'autres applications qu'un lecteur de cartes.

## Revendications

1. Lecteur de carte à circuit(s) électrique(s) comportant un connecteur destiné à assurer une liaison électrique entre des contacts (12₁, 15₁...) de la carte (17) et des contacts correspondants (11, 12, 13, 14, 15, 16) de circuits du lecteur, ces contacts se trouvant sur une plaquette (10), notamment de circuit imprimé, parallèle à la carte (17) quand celle-ci est installée dans le lecteur, les contacts sur la plaquette (10) étant sensiblement au droit des contacts correspondants sur la carte (17) quand celle-ci est installée dans le lecteur, ou se trouvent à l'intérieur de la zone de projection des contacts de la carte sur la plaquette, et pour établir la connexion entre deux contacts correspondants (12, 12₁) de la carte et du lecteur, le connecteur (18) comporte deux lames élastiques (76, 80, 82, 88) mécaniquement indépendantes mais en liaison électrique et dont les extrémités libres comportent les zones d'application avec les contacts, respectivement, de la plaquette (10) du lecteur et de la carte (17), caractérisé en ce que la lame (82) destinée à entrer en contact avec la plaquette (10) du lecteur présente une extrémité fixe (84) dont la distance à la plaquette (10) est sensiblement plus grande que la distance à la carte (17).

2. Lecteur selon la revendication 1, caractérisé en ce que la liaison électrique entre les deux lames est assurée par une agrafe (72) permettant de fixer ces lames à une partie (48₄) d'un support (20) du connecteur, cette agrafe formant de préférence une pièce d'un seul tenant avec les deux lames.

3. Lecteur selon la revendication 2, caractérisé en ce que l'agrafe (72) a sensiblement la forme d'un U.

4. Lecteur selon l'une quelconque des revendications précédentes, caractérisé en ce qu'il comprend un connecteur (18) à lames élastiques solidaires d'un support (20) dont la distance à la plaquette (10) sur le lecteur est plus grande que sa distance à la carte (17) quand celle-ci est installée.

5. Lecteur selon la revendication 4, caractérisé en ce qu'un composant de circuit (110) est disposé sur la plaquette (10) au moins partiellement sous le support (20) du connecteur.

6. Lecteur selon la revendication 4 ou 5, caractérisé en ce qu'il comporte des moyens de fixation (30, 32) du support du connecteur à la plaquette (10).

7. Lecteur selon l'une quelconque des revendications précédentes, caractérisé en ce qu'il comprend un connecteur pour relier électriquement les contacts de la plaquette (10) à ceux de la carte (17) qui comprend un support (20) s'appuyant sur un capot (34) de protection de la plaquette, des moyens de fixation du support du connecteur à la plaquette assurant ainsi la fixation du capot.

8. Lecteur selon la revendication 7, caractérisé en ce que l'appui du support (20) de connecteur au capot (34) est sous les agrafes.

9. Lecteur selon l'une quelconque des revendications précédentes, caractérisé en ce que les contacts sur la plaquette (10) et sur la carte (16) étant disposés selon deux rangées, la distance entre les rangées sur la plaquette (10) du lecteur est légèrement inférieure à la distance entre les rangées sur la carte.

10. Lecteur selon l'une quelconque des revendications précédentes, caractérisé en ce que le connecteur (18) présente un support (20) à plaque disposée à distance de la plaquette (10) du lecteur, ce support (20) étant associé à des moyens de positionnement (30, 32, 26, 34) du connecteur par rapport aux contacts de la plaquette (10) et servant aussi à maintenir un capot (34) de protection des circuits.

11. Application d'un lecteur selon l'une quelconque des revendications précédentes, à un appareil portatif, tel qu'un téléphone portable.

12. Connecteur, notamment pour lecteur de carte à circuit(s) électrique(s), destiné à assurer une liaison électrique entre des contacts (12₁, 15₁, ...) dans un premier plan (17) et des contacts correspondants (11 à 16) dans un second plan (10) parallèle au premier, les contacts dans le second plan (10) étant sensiblement au droit des contacts correspondants dans le premier plan (17), ou se trouvent à l'intérieur de la zone de projection des contacts du premier plan sur le second plan, et ledit connecteur (18) comportant deux lames élastiques (76, 80, 82, 88) mécaniquement indépendantes mais en liaison électrique et dont les extrémités libres comportent les zones d'application avec les contacts, respectivement, du premier plan (17) et du second plan (10), caractérisé en ce que la lame (82) destinée à entrer en contact avec le second plan présente une extrémité fixe (84) dont la distance au second plan est sensiblement plus grande que la distance au premier plan (17).
